# EUROPÄISCHE PATENTANMELDUNG

(11) **EP 0 553 799 A1**
(43) Veröffentlichungstag der Anmeldung: **04.08.1993**
(21) Anmeldenummer: 93101227.2
(22) Anmeldetag: 27.01.1993
(51) Int. Cl.: B41F 1/00, B41F 23/04

(54) **Belüftungs- und Trockenvorrichtung für eine Druckmaschine**

(30) Priorität: 31.01.1992 IT MI920183
(71) Anmelder: OFFICINE MECCANICHE GIOVANNI CERUTTI S.p.A., I-15033 Casale Monferrato Alessandria (IT)
(72) Erfinder: Cerutti, Giancarlo, I-15033 Casale Monferrato (IT); Fantoni, Giuseppe, I-15039 Ozzano Monferrato (IT); Forno, Mario, I-15033 Casale Monferrato (IT); Gibellino, Giancarlo, I-13039 Trino Vercellese (IT); Miglietta, Giampiero, I-15033 Casale Monferrato (IT)
(74) Vertreter: Mayer, Hans Benno, Dipl.-Ing.

(57) **Zusammenfassung**

Belueftungs- und Trockenvorrichtung fuer eine Druckmaschine, in der unmittelbar nach dem Ausgang eines ersten Druckzylinders (102) eines Druckelementes (103), eine erste Belueftungs- und Trockenvorrichtung (101) vorgesehen ist und unmittelbar vor dem Einlaufen eines zweiten Druckzylinders (109) eines nachfolgenden Druckelementes (107), eine weitere Belueftungs- und Trockeneinrichtung (108) vorgesehen ist.

## Beschreibung

Die vorstehende Erfindung betrifft eine Belueftungs- und Trockenvorrichtung fuer eine Druckmaschine, besonders fuer eine Rotationsdruckmaschine.

Es ist aus dem Stand der Technik bekannt geworden, eine zu bedruckende Bahn zu einem Druckzylinder eines ersten Druckelementes zu foerden und nach erfolgtem Druckvorgang, die Materialbahn durch eine Belueftungs- und Trockenvorrichtung Zu foerdern, die ueber dem Auslauf des Druckelementes angeordnet ist. Sobald die bedruckte Bahn eine aufwaerts gerichtete Bewegung durch eine erste Belueftungs- und Trockenvorrichtung abgeschlossen hat, erfolgt ein Umlenken der bedruckten Bahn, um zu ermoeglichen, dass diese eine nach unten gerichteten Bewegung durch eine zweite Belueftungs- und Trockeneinrichtung laeuft, die ebenfalls ueber dem Druckelement angeordnet ist und ueber dem Druckelement neben der ersten Belueftungs- und Trockeneinrichtung angeordnet ist.

Im Anschluss daran laeuft die Papierbahn erneut mit nach oben gerichteter Bewegung an der Aussenseite des zugeordneten Druckelementes entlang und, unter Vorsehung zahlreicher Fuehrungs- und Umlenkrollen,laeuft die Bahn zur Oberseite des Druckelementes, um nach Durchlaufen einer sehr langen Strecke, einem weiteren Druckelement zugefuehrt zu werden.

Es ist erkennbar, dass die bekannte Belueftungs- und Trockenvorrichtung, bei der die erforderlichen Belueftungshauben jeweils im Inneren des Gestells eines einzigen Druckelementes der Rotationsdruckmaschine vorgesehen sind, die Vorsehung zahlreicher Fuehrungs- und Umlenkrollen erfordert, die zur Fuehrung der bedruckten Bahn vom Druckzylinder durch die Belueftungs- und Trockeneinheit und von dieser um das Gestell des Druckelementes in Richtung eines folgenden Druckelementes notwendig sind.

Daraus folgt, dass die Bandlaenge zwischen zwei Druckelementen erhebliche Werte annimmt, was zu einer erhoehten Rissgefahr der zu bedruckenden Bahn fuehrt. Des weiteren fuehrt die grosse Bandlaenge, die sich zwischen zwei benachbarten Druckelementen befindet, zu grossen Schwierigkeiten, was eine genaue Registereinstellung zwischen zwei aufeinderfolgenden Druckzylindern anbelangt, die fuer den Druck von zwei verschiedenen Farben vorgesehen sind.

Ein weiterer Nachteil bei den bekannten Druckelementen, aufgrund der grossen Anzahl vorhandener Fuehrungsrollen und Umlenkrollen, die fuer die sichere Fuehrung der bedruckten Bahn durch die Belueftungs- und Trockenvorrichtung vorgesehen sind, ist darin zu sehen, dass fuer das Einfuehren der Bahn von einem Druckelement zum anderen Druckelement, z.B. bei Auftreten eines Bandrisses, erhebliche Verzoegerungen in der Behebung der Stoerung auftreten.

Aufgabe der vorstehenden Erfindung ist es, die Nachteile des Standes der Technik zu vermeiden und eine Belueftungs- und Trockenvorrichtung fuer eine Druckmaschine vorzuschlagen, mit der es moeglich ist, die zwischen zwei Druckelementen vorhandene Bahnlaenge wesentlich zu verringern und dadurch auch wesentlich zu einer Verkuerzung der gesamten Bahnlaenge in der Rotationsdruckmaschine beizutragen, was dann zu einer Vereinfachung der genauen Registereinstellung zwischen zwei aufeinanderfolgenden Druckelementen und folglich in der gesamten Druckmaschine fuehrt. Durch die Erfindung wird es moeglich, einen Grossteil der bisher ueblichen Fuehrungs- und Umlenkrollen zu beseitigen und einen kurzen und im wesentlichen geradlinigen Verlauf der zu bedruckenden Bahn von einem Druckelement zum anderen Druckelement zu schaffen.

Diese Aufgaben werden erfindungsgemaess dadurch geloest, dass unmittelbar nach dem Ausgang des Druckzylinders eines Druckelementes eine erste Teilvorrichtung fuer die Belueftung und das Trocknen der Bahn vorgesehen ist und unmittelbar vor dem Einlauf des Druckzylinders eines folgenden Druckelementes, eine zweite Teilvorrichtung fuer die Belueftung und den Trockenvorgang der Bahn vorgesehen ist.

Durch Vorsehen einer Teilvorrichtung in Form einer Belueftungs- und Trockenhaube unmittelbar nach dem Druckzylinder eines ersten Druckelementes und durch Anordnung einer weiteren Teilvorrichtung in Form einer zweiten Belueftungs- und Trockenvorrichtung unmittelbar vor dem Druckzylinder eines anschliessenden Druckelementes, wird es moeglich, die Materiallaenge der Papierbahn zwischen zwei Druckzylindern zweier benachbarter Druckelemente wesentlich zu verkuerzen. Ferner wird der Bahnverlauf der Papierbahn geradlinig und gleichmaessig gestaltet, ferner sind nur wenige Umlenkrollen vorzusehen. Des weiteren wird es moeglich, die benachbarten Druckelemente in unmittelbarer Naehe "Seite an Seite" aufzustellen, was einer wesentlichen Verkuerzung der gesamten Baulaenge der Rotationsdruckmaschine in einer Groessenordnung von ca. 30 % entspricht.

Dank der modernen Druckfarben, die heute auf dem Markt angeboten werden, besteht beim Durchlauf der Papierbahn durch eine erste Teilvorrichtung zum teilweisen Belueften und Trocknen unmittelbar nach dem Ausgang eines Druckzylinders die Moeglichkeit, die Druckfarbe besonders intensiv und ausreichend zu trocknen und somit die Moeglichkeit zu schaffen, die bedruckte Seite der Bahn im Anschluss ueber zwei Umlenkrollen zu lenken und die Moeglichkeit zu schaffen, dass beim Durchlauf der bedruckten Bahn durch eine zweite Vorrichtung zum Belueften und Trocknen der Druckfarbe, die unmittelbar vor dem Einlauf des folgenden Druckzylinders vorgesehen ist, die im vorangegangenen Druckzylinder aufgetragene Druckfarbe endgueltig zu trocknen, um einen weiteren Druckvorgang mit unterschiedlicher Farbe durch den folgenden Druckzylinder zu ermoeglichen.

Da die Papierbahn unter Verwendung einer Belueftungs- und Trockenvorrichtung auch unmittelbar vor dem Einlauf in einen anschliessenden Druckzylinder beeinflusst wird, wird es nicht nur moeglich, die Druckfarbe vollstaendig zu trocknen, um einen weiteren Druckvorgang zu ermoeglichen, sondern es besteht auch die Moeglichkeit, auf die zu bedruckende Bahn in der Art einzuwirken, dass die Bahnoberflaeche einer Klimatisierung unterworfen wird, indem die Papierbahn z.B. Strahlen unterschiedlicher Art ausgesetzt wird, und somit die zu bedruckende Oberflaeche in optimaler Weise fuer den nachfolgenden Druckvorgang vorzubereiten.

Der Erfindungsgegenstand wird nun anhand eines Ausfuehrungsbeispieles genauer beschrieben und in den Zeichnungen schematich dargestellt. Es zeigen:
Fig. 1 den Verlauf einer Papierbahn in einem Druckelement, dass mit einer herkoemmlichen Belueftungs- und Trockeneinrichtung versehen ist;
Fig. 2 schematisch den Verlauf einer Papierbahn durch zwei benachbarte Druckelemente, die mit Belueftungs- und Trockenvorrichtungen nach der Erfindung ausgeruestet sind;
Fig. 3 und 4 zwei Druckelemente, die mit unterschiedlichen Hauben zur Bildung der erfindungsgemaessen Vorrichtung ausgeruestet sind; und
Fig. 5 zwei Druckelemente, die mit Belueftungs- und Trockeneinrichtungen gemaess der Erfindung ausgeruestet sind.

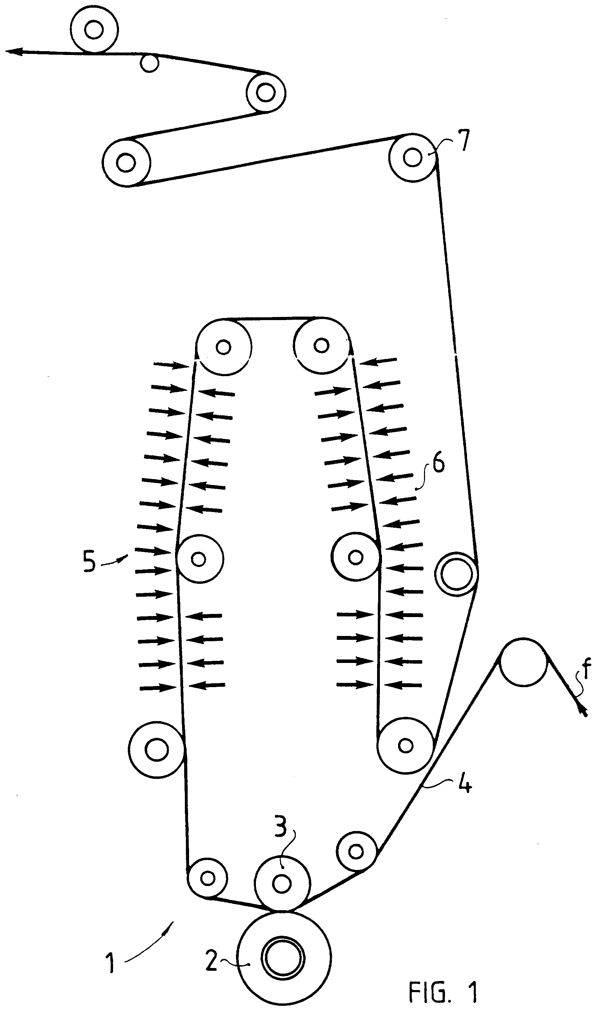

Der Fig. 1 kann ein herkoemmliches Druckelement 1 entnommen werden, das mit einem Druckzylinder 2 und einem Anpresszylinder 3 ausgeruestet ist.

Die Papierbahn 4 wird in Richtung des Pfeils (f) dem Druckzylinder 2 zugefuehrt, im Anschluss daran, wird die Bahn 4, mit aufwaerts gerichtetem Bewegungsverlauf, durch eine erste Belueftungshaube 5 geleitet, um im Anschluss daran mit nach unten gerichtetem Bewegungsverlauf eine zweite Belueftungs- und Trockenhaube 6 zu durchlaufen, deren Ausgang in der Naehe des Einlaufes des Druckzylinders 2 vorgesehen ist. Somit, nach Durchlaufen einer Anzahl von Fuehrungs- und Umlenkrollen 7 wird die Papierbahn 4 in Richtung des Auslaufes des ersten Druckelementes geleitet und von hier zu einem nachfolgenden Druckelement.

Wie der Fig. 1 deutlich zu entnehmen ist, erfordert dieses bekannte Bauprinzip eine sehr grosse Papierlaenge, um von einem Druckzylinder zu dem folgenden Druckzylinder zu gelangen, dieses fuehrt zu den bereits beschriebenen Nachteilen.

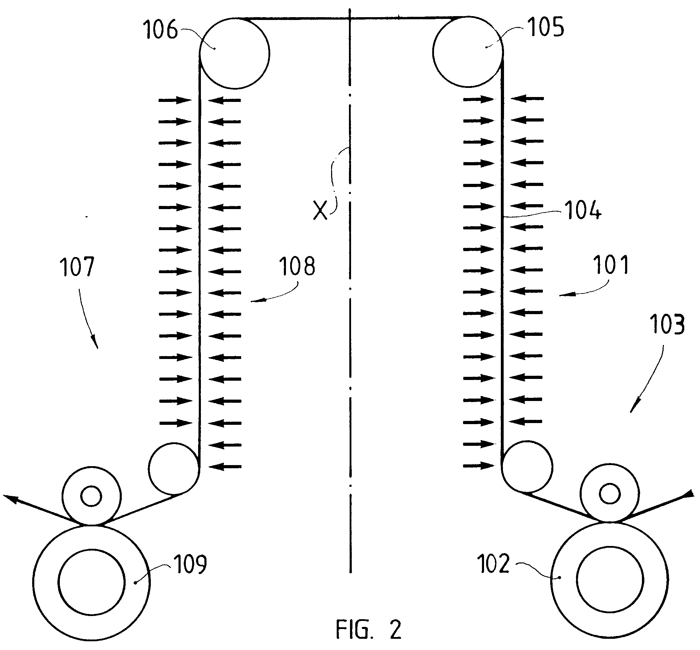

Wird hingegen, wie in Fig. 2 dargestellt, eine erste Teilvorrichtung in Form einer Belueftungs- und Trockenhaube 101 in unmittelbarer Naehe des Auslaufes des Druckzylinders 102 eines ersten Druckelementes 103 vorgesehen, so wird es am Ausgang des Druckzylinders 102 bereits moeglich, die gesamte Bauhoehe des ersten Druckelementes 103 auszunuetzen, um auf die Druckfarbe einzuwirken, die auf die Papierbahn 104 ueber den Zylinder 102 aufgetragen wurde.

Sobald die Papierbahn 104 nach Durchfuehren einer nach oben gerichteteten Bewegung eine Umlenkrolle 105 erreicht, die an der Oberseite des ersten Druckelementes 103 angeordnet ist, so kann festgestellt werden, dass die aufgetragene Druckfarbe der Papierbahn 104 bereits soweit getrocknet ist, dass ein kurzes Umlenken der Papierbahn 104 um die Umlenkrolle 105, 106 ohne Beschaedigen des Druckbildes erfolgen kann. In Uebereinstimmung mit dem folgenden Druckelement 107 ist die zweite Teilvorrichtung 108 zum Belueften und Trocknen der Papierbahn vorgesehen. Diese Teilvorrichtung 108 erstreckt sich von der Umlenkrolle 106 bis in unmittelbare Naehe des Druckzylinders 109 des benachbarten Druckelementes 107.

Mit anderen Worten, durch Vorsehen von Teileinrichtungen zum Belueften und Trocknen einer Papierbahn in unmittelbarer Naehe des Auslaufes eines ersten Druckzylinders 102 eines ersten Druckelementes 103 und durch Vorsehen einer zweiten Teilvorrichtung zum Belueften und Trocknen der Papierbahn in unmittelbarer Naehe des Einlaufs des Druckzylinders 109 eines benachbarten Druckelementes 108, wird es moeglich, den Verlauf der Papierbahn 104 zu vereinfachen und zwischen benachbarten Druckelementen die Laenge der Papierbahn wesentlich zu verkuerzen. Ferner wird es moeglich, die einzelnen Druckelemente "Seite an Seite" in unmittelbarer Naehe zueinander in Uebereinstimmung mit der Achse (X) anzuordnen, wodurch es moeglich wird, die Gesamtbaulaenge der Rotationsdruckmaschine erheblich zu verkuerzen.

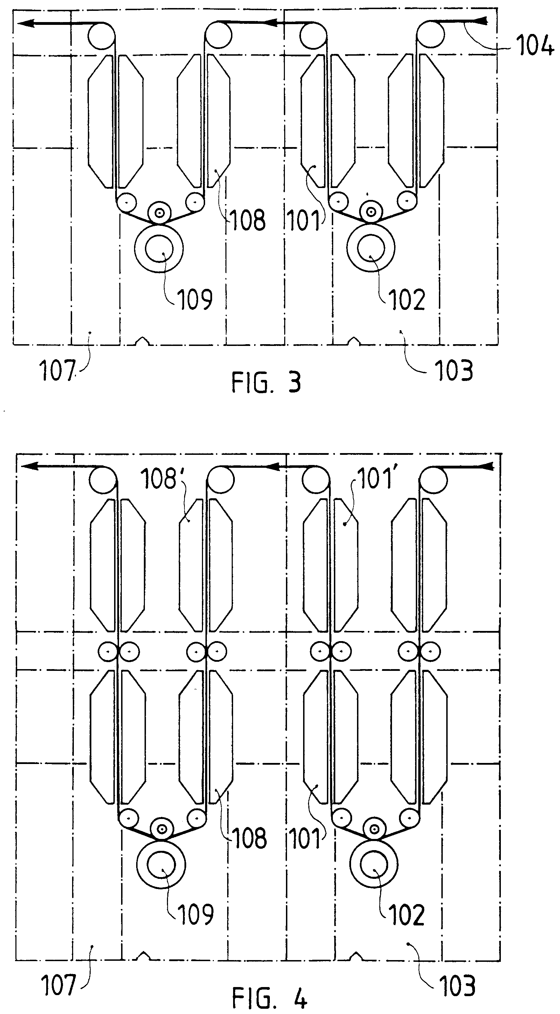

Dies kann der schematischen Zeichnung nach Fig. 3 deutlich entnommen werden, hier wird erkennbar, dass die benachbarten Druckelemente 103 und 107 in unmittelbarer Naehe zueinander angeordnet werden koennen. Der Fig. 3 kann auch entnommen werden, dass dank der Vorsehung einer ersten Teilvorrichtung 101 zum Belueften und Trocknen der Papierbahn in unmittelbarer Naehe des Auslaufes des Druckzylinders 102 und der Vorsehung einer weiteren Teilvorrichtung 108 zum Belueften und Trocknen der Papierbahn in unmittelbarer Naehe des Einlaufes des anschliessenden Druckzylinders 109 der benachbarten Druckeinheit 107, der Verlauf der Papierbahn 104 sehr verkuerzt wird und geradlinig ohne zahlreiche Umlenkstellen ausgebildet ist.

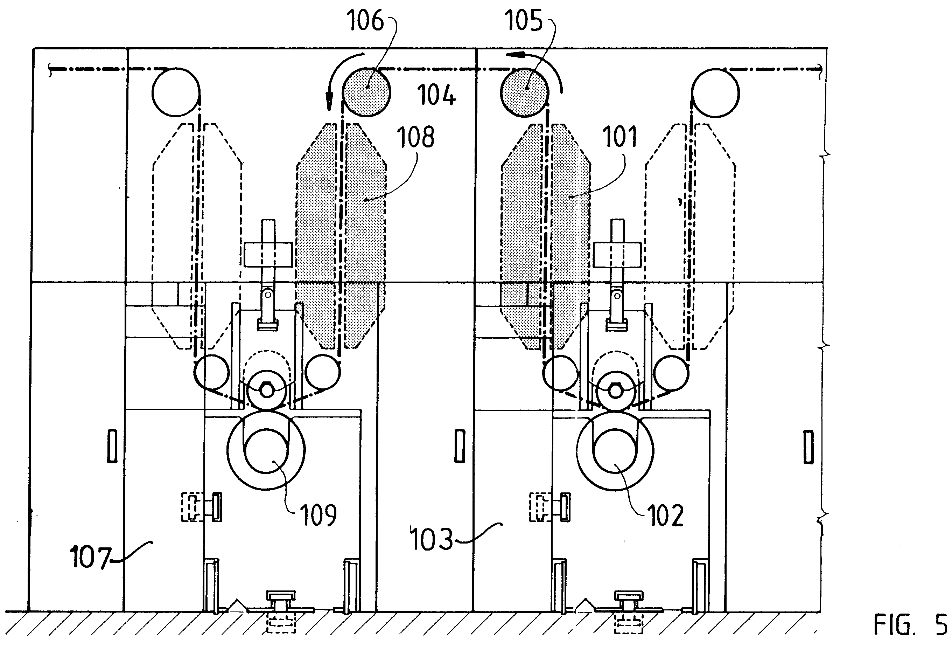

Der Fig. 4 kann entnommen werden, dass die Druckelemente 103 und 107, die mit einer Teilvorrichtung 101 zum Belueften und Trocknen in unmittelbarer Naehe des Ausganges des Druckzylinders 102 sowie mit einer Teilvorrichtung zum Belueften und Trocknen 108 in unmittelbarer Naehe des Einlaufes des Druckzylinders 101 des benachbarten Druckelementes 107 ausgeruestet sind, in ihrer Entlueftungs- und Trockenleistung dadurch vergroessert werden koennen, dass ueber der Teilvorrichtung 101 eine weitere Belueftungs- und Trockeneinrichtung 101' und ueber der Teilvorrichtung 108 eine weitere Trocken- und Belueftungsvorrichtung 108' vorgesehen ist. Die Vorsehung einer doppelten Anzahl von Belueftungs- und Trockeneinrichtungen 101, 101' und 108 und 108' stellt keine Aenderung des Erfindungsgedankens dar, der noch einmal deutlich in Fig. 5 dargestellt ist, in der zwei Druckelemente 103 und 107 in Vorderansicht gezeigt sind, denen eine Papierbahn 104 zugefuehrt wird. Sobald die Papierbahn 104 unter Zuhilfenahme eines ersten Druckzylinders 102 bedruckt wurde, durchlaeuft die Papierbahn die erste Teilvorrichtung 101 zum Belueften und Trocknen der Bahn, die in unmittelbarer Naehe des Auslaufes des Druckzylinders 102 vorgesehen ist. Bei Durchlaufen der Vorrichtung 101 mit nach oben gerichteter Bewegung wird die Papierbahn 104 dank der Merkmale der modernen, heute angebotenen Druckfarben in einer Groessenordnung von 80 % getrocknet. Dies erlaubt der Papierbahn 104 mit der bedruckten Seite ueber eine Umlenkrolle 105, die am Ausgang des Druckelementes 103 vorgesehen ist, zu laufen und weiter eine Umlenkrolle 106 zu ueberlaufen, die am Eingang des benachbarten Druckelementes 107 vorgesehen ist. Wenn es gewuenscht ist, koennen die Umlenkrollen 105 und 106 mit einem weichen, einem Anhaften entgegenwirkenden Belag ummantelt sein. Im Anschluss daran durchlaeuft die Papierbahn 104 mit nach unten gerichteter Bewegung die Vorrichtung 108, in der ein vollstaendiges Trocknen der Druckfarbe erfolgt. Gleichzeitig erfolgt ein Klimatisieren der Papierbahn 104, was ein einwandfreies Aufbringen einer weiteren Farbe durch den Druckzylinder 109 des folgenden Druckelementes 107 erlaubt.

Die Lehre, die der Erfindung zu entnehmen ist, ist darin zu sehen, dass eine erste Teilvorrichtung zum Belueften und Trocknen einer bedruckten Papierbahn am Auslauf eines Druckzylinders 102 vorgesehen ist, der Bestandteil eines ersten Druckelementes 103 ist und dass ferner eine zweite Teilvorrichtung fuer die Belueftung und Trocknung sowie Klimatisierung in Uebereinstimmung mit dem folgenden Druckelement 107 in unmittelbarer Naehe des Einlaufes des entsprechenden Druckzylinders 109 vorgesehen ist.

## Patentansprüche

1. Belueftungs- und Trockenvorrichtung fuer eine Druckmaschine, **dadurch gekennzeichnet**, dass unmittelbar nach dem Auslauf des Druckzylinders (102) eines Druckelementes (103) eine erste Teilvorrichtung (101) zum Belueften und Trocknen der Papierbahn (104) vorgesehen ist, und in unmittelbarer Naehe vor dem Einlauf des Druckzylinders (109) eines folgenden Druckelementes (107) eine zweite Teilvorrichtung zum Belueften und Trocknen (108) der Papierbahn vorgesehen ist.

2. Belueftungs- und Trockenvorrichtung, nach Patentanspruch 1, **dadurch gekennzeichnet**, dass die Vorrichtung (101), die am Ausgang des ersten Druckzylinders (102) angeordnet ist, von der Papierbahn (104) mit steigender Bewegung durchlaufen wird und die Vorrichtung (108), die vor dem Einlauf des folgenden Druckzylinders (109) vorgesehen ist, mit fallender Bewegung der Papierbahn (104) durchlaufen wird.

3. Belueftungs- und Trockenvorrichtung, nach Patentanspruch 1, **dadurch gekennzeichnet,** dass mehrere Teilvorrichtungen (101, 101' bzw. 108, 108') zum Belueften und Trocknen vorgesehen sind, die geteilt und uebereinander angeordnet sind (Fig. 4).

4. Belueftungs- und Trockenvorrichtung nach Patentanspruch 1, **dadurch gekennzeichnet**, dass am Auslauf der Vorrichtung (101), die dem ersten Druckzylinder (102) zugeordnet ist, und am Einlauf der Vorrichtung (108), die dem zweiten Druckzylinder (109) zugeorndet ist, jeweils eine Umlenkrolle (105, 106) vorgesehen ist.

5. Belueftungs- und Trockenvorrichtung, nach Patentanspruch 1, **dadurch gekennzeichnet**, dass die Druckelemente (103, 107) Seite gegen Seite, in Uebereinstimmung mit einer senkrechten Achse (X) zueinander angeordnet sind.
